# EUROPEAN PATENT SPECIFICATION

(11) **EP 1 756 685 B1**
(45) Date of publication and mention of the grant of the patent: **20.10.2010**
(21) Application number: 05740492.3
(22) Date of filing: 14.04.2005
(51) Int. Cl.: G05B 23/02

(54) **METHOD FOR TESTING OF A COMBINED DYNAMIC POSITIONING AND POWER MANAGEMENT SYSTEM**
VERFAHREN ZUM TESTEN EINES KOMBINIERTEN DYNAMISCHEN POSITIONIERUNGS- UND LEISTUNGSVERWALTUNGSSYSTEMS
PROCEDE DE TEST DE SYSTEME DE GESTION DE PUISSANCE ET DE POSITIONNEMENT DYNAMIQUE COMBINE

(30) Priority: 08.06.2004 NO 20042415
(43) Date of publication of application: 28.02.2007
(73) Proprietor: Marine Cybernetics AS, 7075 Tiller (NO)
(72) Inventor: JOHANSEN, Tor Arne, N-7560 VIKHAMAR (NO); SKJETNE, Roger, 7053 Ranheim (NO); SØRENSEN, Asgeir J., N-7079 TRONDHEIM (NO)
(74) Representative: Haley, Stephen
(86) International application number: PCT/NO2005/000122
(87) International publication number: WO 2005/121915

(56) References cited:
- US-A- 5 214 582
- US-A- 5 317 542

## Description

### Introduction

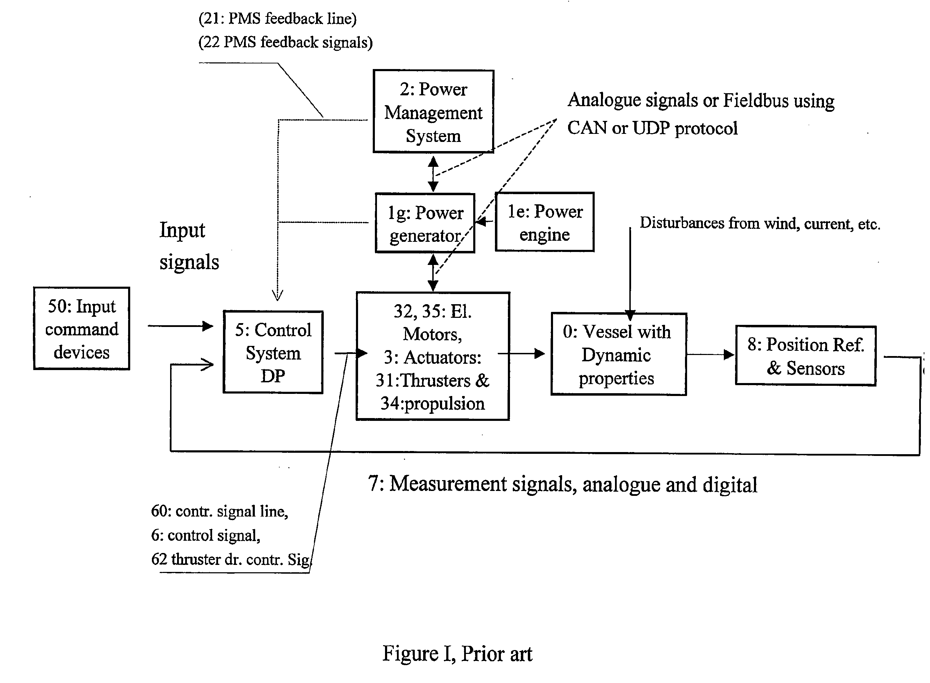

A vessel (0) with a dynamic positioning (DP) system (5) for station keeping or other applications will in many cases have diesel-electrical powering of propellers (34) and thrusters (31), see Fig. 1 for a schematic illustration of prior art. As further illustrated in Fig. 1, electric energy is produced on board the vessel (0) by a power plant (1) that comprises electrical generators (1 g) that are driven by diesel engines and / or gas turbines (1e), and a marine automation system that includes a power management system (PMS) (2). The electrical power consumed by the electrical engines for the propellers (34) and thrusters (31) may constitute a significant major part of the produced electrical power consumed on board. Consequently, if the control signals (6) from a dynamic positioning "DP" control system (5) to the electrical motors (35, 32) for propellers or thrusters (34, 31) incurs a high and rapidly changing power consumption, the result may be electrical power overload, large power fluctuations, or off-design operation of the power generation plant. This may lead to shut-down of the power plant (1) and a discontinuation in the supply of electrical power. This situation, which is referred to as a black-out, is costly and potentially dangerous, and may lead to loss of mission, damage of equipment, serious accidents and wrecking of the vessel (0). On this background it appears important to test the interaction between the DP control system (5) and the power plant (1), including the power management system (2) and parts of the marine automation system, to make sure that black-outs, unacceptable power fluctuations, or other incorrect events or conditions will not occur under DP operation of the vessel (0). Presently used testing procedures do not allow for systematic testing of the DP system (5) in combination with an electrical power plant (1) under demanding simulated but realistic conditions. This means that there is a need for testing methods and systems that can test and verify whether the DP system (5) will operate correctly under demanding but realistic operating conditions, or not. This involves both environmental conditions such as weather, and fault tolerance to single and multiple failures in mechanical, electric and electronic equipment such as sensors (8), actuators (3) and signal transmission.

### Background art

US 5214582 describes a diagnostic system for testing an automotive vehicle of the type having sensors and actuators for independently sensing and actuating a number of different functions on-board. The interactive diagnostic system described in this patent publication is a device and method for disconnecting selected control signals intended for being sent to actuators from an on-board control system in a car, and sending of corresponding signals from an external computer directly to the on board actuators in order to test the functioning of the sensors and / or actuators as such independent from the on board computer which is considered to be a control system. However there is no mention of the testing of a marine vessel. Furthermore, there is no mention of testing being performed on an on-board electrical power plant.

US 5317542 describes a switch system for a shipboard system for distribution of electrical signals representing parameters such as heading, roll, pitch, and heave to various shipboard systems which utilise said systems. The invention particularily pertains to ocean bottom mapping by means of sonar. The system does not however solve the problem of testing whether a vessels DP system in conjunction with its electrical power supply system.

### Short summary of the invention

The abovementioned problems may be solved by the use of the present invention which proposes a method for testing a control system of a marine vessel, in which said control system receives input commands like desired position, heading, and speed from an input command device and sends control signals to actuators such as electrical thruster drive motors for thrusters and electrical propeller motors for fixed-shaft propellers. Said vessel further comprises sensors such as position reference sensors providing sensor signals back to said control system, and in which said actuators receive electrical energy provided by an on-board power system being controlled by a power management system. The method is characterized by the following steps:
- a simulator receives one or more signals from said vessel ;
- said simulator comprising
   a simulated actuator module providing simulated actuator forces to
   a simulated vessel module comprising an algorithm for computing the dynamic behaviour of said simulated vessel, and
   - a simulated sensor module providing simulated sensor signals describing the calculated dynamic state of said simulated vessel;
   said sensor module returning one or more of said simulated sensor signals modeled under simulated disturbances like simulated wind, current, and waves, to said control system while said control system sends control signals to said actuators, for testing whether said real power system may provide sufficient power when controlled by said real power management system when said power management system is commanded by said control system, under said simulated sensor signals and said simulated disturbances.

The invention furthermore discloses a system for testing a control system of a marine vessel in which said control system is arranged for receiving input commands such as desired position, heading, and speed from an input command device and is arranged for sending control signals to actuators such as electrical thruster drive motors for thrusters and electrical propeller motors for fixed-shaft propellers. Said vessel comprises sensors such as position reference sensors arranged for providing sensor signals back to said control system. Said actuators are arranged for receiving electrical energy provided by an on-board power system being controlled by a power management system. The system is characterized by the following features:
- a simulator arranged for receiving one or more signals from said vessel;
- said simulator comprising
   a simulated actuator module arranged for providing simulated actuator forces to
   a simulated vessel module comprising an algorithm for computing the dynamic behaviour of said simulated vessel, and
   a simulated sensor module arranged for calculating simulated sensor signals for describing the calculated dynamic state of said simulated vessel; said sensor module arranged for returning one or more of said simulated sensor signals modeled under simulated disturbances like simulated wind, current, and waves, to said control - system while said control system is arranged for continuously sending control signals to said actuators,
   said system for testing whether said real power system may provide sufficient power controlled by said real power management system when said power management system is commanded by said control system under said simulated sensor signals and said simulated disturbances.

Other advantages and novel features of the present invention will become apparent from the following detailed description of the invention.

### Short figure captions with some comments to the drawings

The prior art is illustrated in the attached figures identified by numerals. The drawings are meant for illustrating the invention only, and shall not be construed to limit the invention, which shall be limited by the attached patent claims only.

Generally, the drawings in Fig. 1 to Fig. 5 show signal-flow block diagrams in which each block is a functional part of the system, being mechanically and / or logically connected, and having a set of input signals and a set of output signals. These signals may be analogue and / or digital, and may be transmitted over one ore more signal lines that may include a data bus or network. The drawings show the signal flow between the functional blocks where the signals are transmitted along lines with arrows that indicate the direction of the signals from one block to another.

According to standard terminology the sensors (8) for measuring position and heading are referred to as "position reference" sensors (8), while all other measurements are accumulated under "sensors." (8) In addition, the rudders of the vessel (0) are included under "Thrusters" when these are actively used by the DP system (5) to generate thrust in combination with the main propellers.
Fig. 1 illustrates prior art with a control system (5) for a marine vessel (0).
Figure 2 illustrates a first embodiment of the invention in which a vessel simulator (100) is connected to receive thruster drive signals (78) from sensors (88) at electrical thruster motors (32, 35).
Fig. 3 illustrates a second embodiment of the invention. The second - embodiment is a modification of the first embodiment of the invention illustrated in Fig. 2, the difference being that the thruster motor drive sensor signals (78) being fed back to the control system (5), and power management feedback signals (22) from the power management system (2) being sent to the control system (5).
Fig. 4 illustrates a third embodiment of the invention. The third embodiment is similar to the first and second embodiments shown in Figs. 2 and 3, but more elements are simulated and thus more extensive simulation is conducted in the simulator (100): Simulated electrical drive motors (32', 35') corresponding to the real thruster electrical drive motors (32, 35) are included in the simulator. This embodiment includes the thruster feedback (78') from simulator to the DP-control system (5).
Fig. 5 illustrates a fourth embodiment of the invention, slightly different from the third embodiment shown in Fig. 4 the difference being that the real PMS (2) being arranged to provide real PMS feedback signals (22) to the control system (5). This embodiment also includes the thruster feedback (78') from simulator to the DP-control system (5).
Fig. 6 illustrates the possible rotational movements of a vessel (0) in the sea: roll about the longitudinal axis, pitch about a thwartship axis, and yaw about a vertical axis, together with surge, sway and heave along the same axes.
Fig. 7 illustrates surge, sway and yaw in the horizontal x-y plane.
Fig. 8 is a similar view as the previous figure, of a drilling platform for being arranged at a dynamic station-keeping drilling operation by using thruster propellers.

### Description of preferred embodiments of the invention

Fig. 1 illustrates prior art with a control system (5) for a marine vessel (0). The control system (5) is arranged for receiving analogue or digital measurements (7) from position reference sensors (81) and a number of other sensors having a common numeral (8). The control system (5) further receives input commands from a command input device (50) like a joystick, a position setting device for a DP system, a heading command device for setting a desired heading or rudder or thruster angle, a speed command device for setting a desired speed, etc. Based on the - measurements and the input commands the control system (5) sends control signals (6) to several devices on board, most importantly to actuators (3) like thrusters (31) and propellers (34) that may be driven by electrical thruster engines (32) and electrical propeller engines (35). This usually includes electric power converters such as frequency converters. Power generators (1g) driven by power engines (1e) like diesel engines are controlled by a power management system (2) in order for the power generators (1 g) to provide sufficient and stable power to the switchboards on demand from the actuators (3) when the actuators (3) are commanded from the control system (5). The marine vessel (0) is acted upon by wind, currents and waves that may disturb the position, heading or speed of the vessel (0). The power management system (2) may have a power management system feedback line (21) for PMS feedback signals (22) to the control system (5). The PMS (2) may be arranged without such a feedback line, operating only directly versus the power generator and power engine (1g, 1 e) on demand from the power consumers like the actuators (3) and other power consumers and suppliers on board the vessel (0).

The communication and signals are typically of the following type:
- From sensors and position and heading reference sensors (8) to the DP control system (5) the signals (7) are typically a combination of analogue signals and ASCII telegrams transmitted on signal lines (80) like RS485 serial lines that comply with standards such as NMEA 0183, or network message formats defined by the vendors.
- From the DP control system (5) to thruster drives like electrical thruster motors (32) for thrusters, and electrical propulsion motors (35) to propulsion propellers (34) the signals are either analogue signals sent on analogue lines, or digital signals, or messages sent on Fieldbus or communication networks using vendor defined message formats on communication protocols such as CAN or UDP.
- From the power management system "PMS" (2) and marine automation systems (including power system (1)) to the DP or otherwise control system (5) the signals are either analogue/digital lines, or messages sent on Fieldbus or communication networks using vendor defined message formats on communication protocols such as CAN or UDP.

### Power Management Systems (PMS) (2).

The invention relates to a marine vessel (0) with complete or partial electrical powering of motors (35, 32) for propellers (34) and thrusters (31). A vessel (0) will have an electrical power system (1) with generators (1g) that are typically driven with diesel engines and / or gas turbines (1e). The generators (1g) produce electrical power that is supplied to the units of the vessel (0) that consume electrical power. The power is supplied from the generators (1 g) over an electrical power bus (1 b) that in regular operation will provide the required current at a specified voltage to the electrical units like propeller motors (35) and thruster motors (32) of the vessel (0). It is a critical requirement for the safe operation of a vessel (0) that the electrical power system (1) does not break down, and to avoid that a situation in which critical components of the vessel (0) lose their electrical supply. In particular, it must be avoided that the thrusters lose their electrical power. Furthermore, a situation called a "black-out" or "black vessel" must be avoided, a situation characterized by a complete breakdown of the electrical power supply of the vessel (0).

The power system (1) is controlled by a marine automation, or vessel management, system that usually includes a power management system (PMS) (2). The PMS (2) is a particular type of control system comprising a computer program with an algorithm that is executed at a data processor that receives input signals from the electrical power system (1), and that outputs control signals (6) to the electrical power system (1). The PMS (2) involves several functions described below.

The PMS (2) controls the electrical power system (1) so that the electrical energy provided from the electrical power system (1) achieves a specified required current, voltage and frequency. The power demand may vary strongly depending on the operational condition of the vessel (0), with low power demand when the vessel (0) is at port and high power demand when the vessel (0) is in transit, or when the vessel (0) is maneuvering in large waves and strong wind conditions. A vessel (0) may have several electrical generators (1g) driven by e.g. diesel engines (1e). When the power demand is low it may be energy efficient to run only one generator and the associated diesel engine, and to stop the retaining generators and diesel engines. When the power demand is close to the maximum level, it will be necessary to run all generators and the associated diesel engines. In the intermediate power range, it may be desirable to run some of the generators and the associated diesel engines. The PMS (2) will typically be used to automatically manage the starting and stopping of the required number of generators engines (1e) to provide sufficient power and to meet the economic requirements of fuel efficient power generation, and the PMS (2) will in this connection synchronize the system during start-up and shut-own of generators' engines (1e).

The PMS (2) will include safety devices (2d) with functions that ensure that the components of the electrical power system (1) are not damaged in off-design conditions and during failures.

The PMS (2) works in real time to analyze the state of the power system (1e, 1g) and the power demand from the units (32, 35) that consume electrical power. Consider a situation when the PMS (2) determines that the power demand is too high compared to the present production state of the power system (1). Then there are several options for the PMS (2):
- The PMS (2) may start one more generator (1g, 1 e) if there are available generators that are not running.
- The PMS (2) may signal to a power consuming electrical unit (32, 35 or other) that consumes electrical power that this unit must reduce its power consumption, e.g. by a certain percentage or a specified amount of power. This is called "load shedding". This load shedding may be temporary, and may be associated with the time required to start more generators. Independent black-out prevention functions in the form of load shedding are often built into the DP system (5) as well.
- The PMS (2) may decide to shut off the power supply to a unit that consumes electrical power. This is called "load tripping". Load tripping may be an undesirable operation that may cause severe problems. Still, load tripping may ultimately be necessary in some situations in which the alternative may be break-down of the electrical power systems (1).

The PMS (2) will normally comprise a priority function with the objective of giving priority to sufficient power supply to certain units. This means that if the power demand is too high, then load shedding and load tripping will primarily be applied to units that are not deemed critical for the operation of the vessel (0).

Underload may be a problem for example in vessels (0) with a heave compensator that is designed to temporarily supply large amounts of power into the electric power network. In addition, the generators may have a minimum amount of power they supply, such that underload may occur if the thrusters do not consume enough power in for example very calm sea states. This may also lead to black-out.

For some vessels (0) the electrical power system (1) is divided into several independent power systems (1A, 1 B, ...), so that a first power system (1A) will have a set of first power engines (1 eA) with corresponding first electrical generators (1 gA) and a first power bus (1 bA), a second power system (1 B) will have a set of second power engines (1eB) with second electrical generators (1gB) and a second power bus (1 bB), etc. The motivation for this is that if the first power system (1A) breaks down, then electrical power will still be available from the second power system (1 B). The power buses (1bA, 1 bB) of two separate power systems (1A, 1B,...) may be connected or disconnected with power-switches (1T) that are called tie-breakers. In some conditions with high power demands it may be advantageous to connect several independent power systems (1A, 1 B, ...) with the associated tie-breakers (1T) to obtain a sufficient power capacity, whereas in other conditions the tie-breakers should be disconnected so that the independent power systems (1A, 1B,...) are operating separately so that if one power system (1A, 1B,...) breaks down due to a failure situation like diesel engine break-down, generator break-down, or problems with the power bus, then there is still electrical power available from the other power systems (1A, 1B, ...), and a situation of a black ship is avoided. The tie-breakers (1T) are controlled by the PMS (2). The opening and closing of tie-breakers are critical operations, because the connection or disconnection of two independent power buses belonging to separate power systems (1A, 1B,...) may cause large and rapid variations in current and voltage on the two power buses. If these variations in current and voltage become too large, then breakdown of one or more of the independent power systems (1A, 1B,...) may result. This means that it is important that the PMS (2) is designed so that the opening and closing of tie-breakers do not cause break-downs or other operational irregularities.

### First embodiment of the invention.

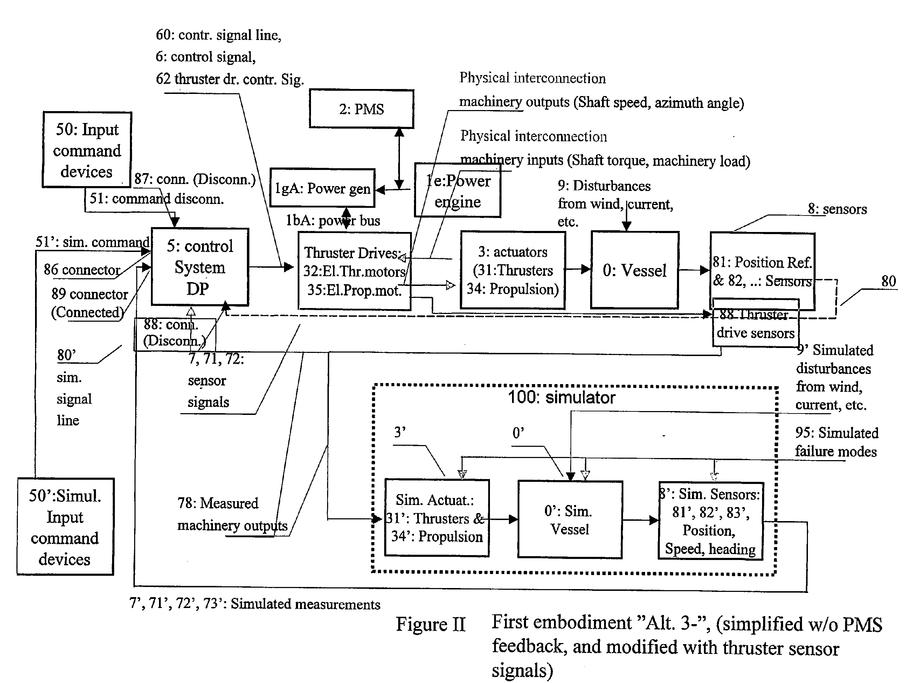

Figure 2 illustrates a first embodiment of the invention in which a vessel simulator (100) is connected to receive thruster drive signals from sensors (88) at electrical thruster motors (32, 35). The vessel simulator (100) comprised in this first embodiment of the invention has simulated actuators (3') providing simulated forces to a simulated vessel (0') giving simulated measurements (7') from simulated sensors (8') like simulated position (71') from a simulated position sensor (81'), simulated speed (72') from a simulated speed sensor (82'), simulated heading (73') from a simulated gyro compass (83') etc. The simulated vessel (0') is also acted upon by simulated disturbances (9') like simulated wind, simulated current, simulated waves, etc described in a separate paragraph of this specification. The simulated vessel (0') may also be subject to simulated failure modes (95') like malfunction of a sensor, malfunction of a rudder, malfunction of a thruster, malfunction of a ballast pump, signal errors due to electromagnetic disturbances, and the like. The real measurements (7) from the sensors (8) are blocked from the control system (5). The simulated measurements (7') are fed into the control system (5) that is still connected to the real thruster drives (32, 35) to send real control signals (6) to the actuators (3). Further, the input command devices (50) may be disconnected from the control system (5) and a simulated input command device (50') may feed a series of simulated input commands to the control system (5). Thus the command system may command the thruster drive motors to respond in real to a series of simulated input commands combined with a series of simulated disturbances while the dynamics of the vessel (0) is otherwise simulated except from the response of the thruster drive motors. In this manner a good test of whether the power system (1) can provide the required electrical power under simulated realistic but rarely occurring conditions may be obtained. The simulated conditions may comprise known current, wind, and wave spectra or any other interesting test conditions such as signal errors or component failures.

### Second embodiment of the invention.

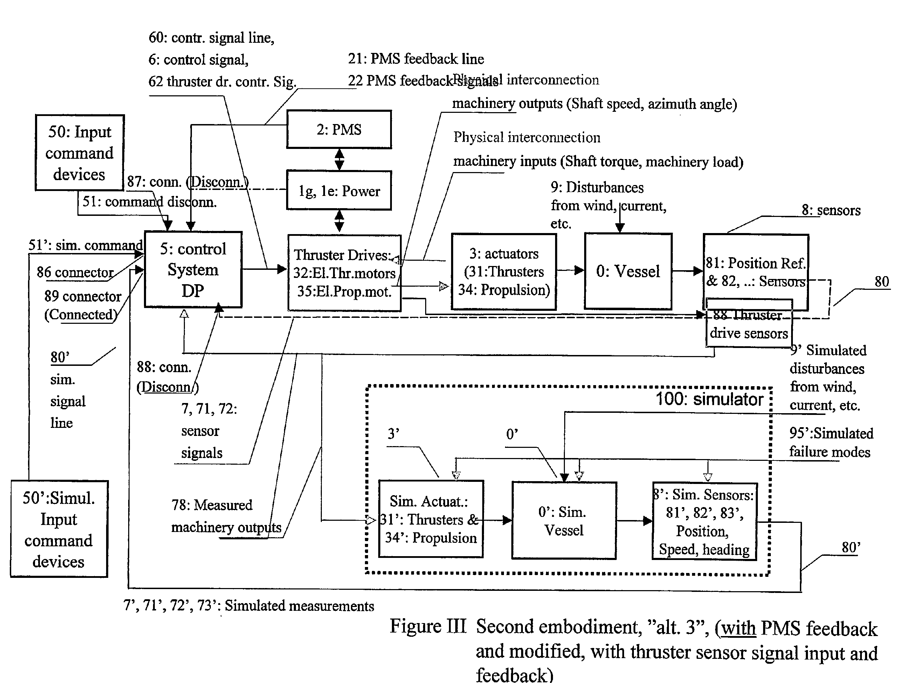

Fig. 3 illustrates a second embodiment of the invention. The second embodiment is a modification of the first embodiment of the invention illustrated in Fig. 2, the difference being that the thruster motor drive sensor signals (78) being fed back to the control system (5), and power management feedback signals (22) from the power management system (2) being sent to the control system (5) on a PMS feedback line (21). The electrical power generator (1g) and the engine (1e) driving the power generator are combined in one box to simplify the drawing.

### Third embodiment of the invention.

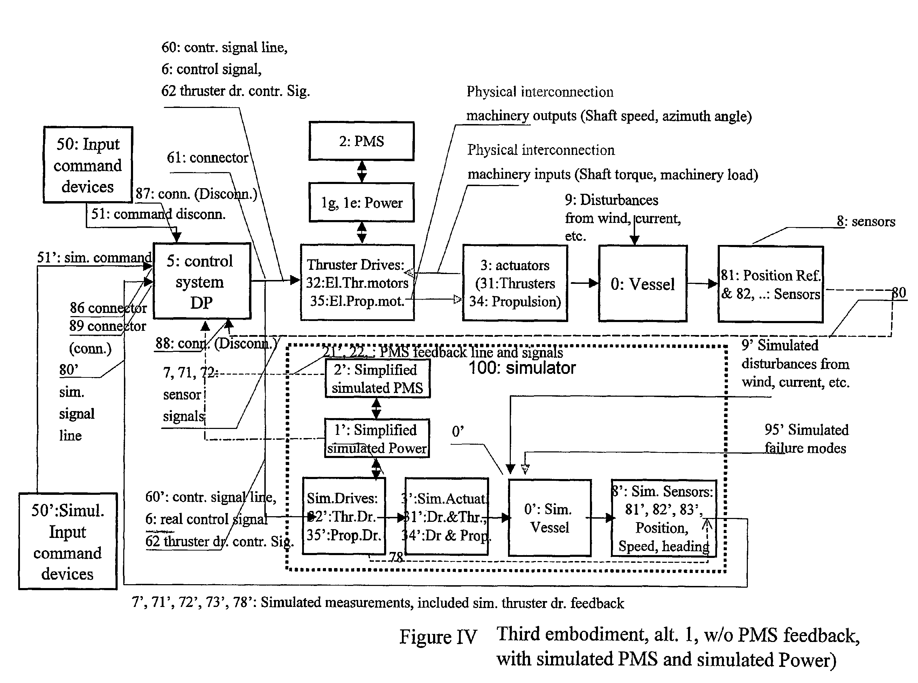

Fig. 4 illustrates a third embodiment of the invention. The third embodiment is similar to the first and second embodiments shown in Figs. 2 and 3, but comprising more elements in the simulator, thus more extensive simulation is conducted in the simulator (100): Simulated electrical drive motors (32', 35') corresponding to the real thruster electrical drive motors (32, 35) are included in the simulator, the simulated motors (32', 35') receiving the same control signals (6) from the control system (5) as provided to the real thruster drive motors (32, 35). The status of the simulated motors (32', 35') is measured by the simulated thruster drive sensors (88') and fed back to the control system (5) on the feedback line (80'). The simulated drive motors (32', 35') are in the simulator (100) simulated to physically connect to the simulated actuators (3') comprising the simulated thrusters (31') and simulated propellers (34'), but additionally, the simulator (100) comprises a simulated power generator (1') with a simulated power management system (2'). Like the above mentioned embodiments of the invention, the simulator transmits the simulated measurements (7') from the vessel simulator (100) back to the real control system (5) that continues to send control signals (6) also to the real thruster drive motors (32, 35) and preferably all other actuators (3), as if the vessel (0) were under normal operation, but acted upon by simulated disturbances (9') and simulated failures (95').

### Fourth embodiment of the invention.

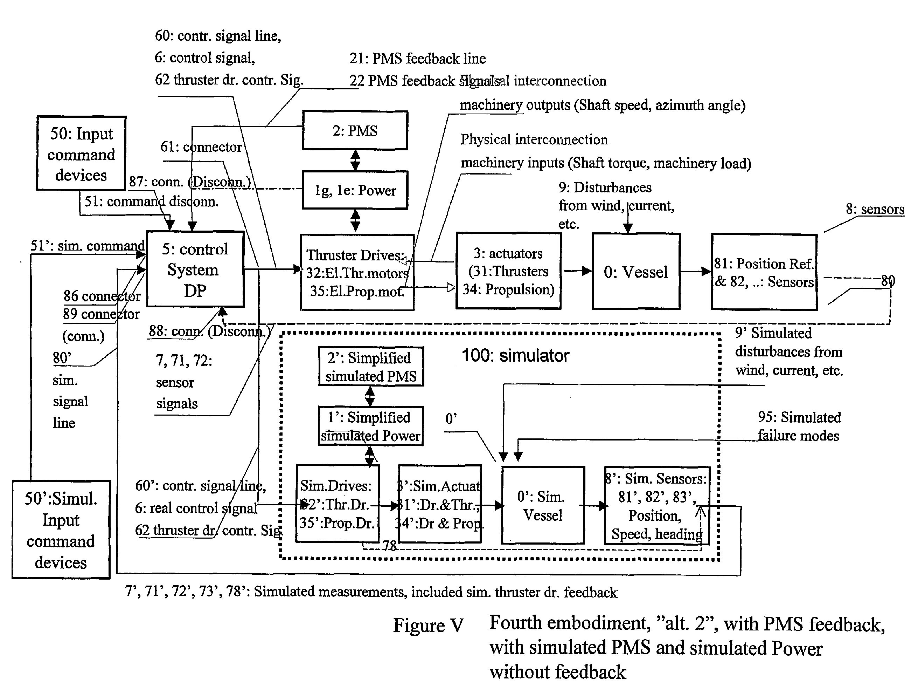

Fig. 5 illustrates a fourth embodiment of the invention, slightly different from the third embodiment shown in Fig. 4, the difference being that the real PMS (2) being arranged to provide real PMS feedback signals (22) to the control system (5), the simulated PMS (2') not being connected to the control system (5) and left to simulate controlling the power production internally in the simulator (100). The simulator still provides sensor signals (7') to the control system (5), and the real vessel (0) still reacts to the real action of the actuators (3) commanded through the control system (5).

### PMS (2), power system (1), machinery and thrusters

Consider a vessel (0) that is powered by electric motor (32) driven thrusters (31). The DP system (5) will then output control signals (6) to the thrusters, please refer to all of Figs. 1, 2, 3, 4 and 5. The control signals (6), which may be in the form of a desired shaft speed, desired propeller pitch, or a desired shaft power for each thruster (31). Ideally, the thruster will almost immediately provide the desired shaft speed, propeller pitch, or shaft power. Due to the fact that the thruster is electrically driven, a change in shaft speed or shaft power for the thruster (31) will involve a change in the electrical power consumed by the electrical thruster motor (32). If this change in electrical power leads to a large increase in the consumed electrical power it may be that the electrical power system (1) under the control of the power management system (2) must go through a sequence of operations possibly involving one or more of load shedding, load tripping, closing and/or opening of tie-breakers, and starting of engines (1e2, 1e3, ..) and other auxiliary machinery such as pumps and compressors necessary to drive generators (1 g2, 1g3,..) that have been inactive. After such a sequence of events, the power system (1) will be able to deliver the required electrical power to the thruster. (One may even imagine situations in which the demanded increase in thruster power is rather small, but power consumption may be near a limit of which another generator would be required to start up.) If the required change in electrical power to the thruster (31) is large and rapid, there may be a significant delay before the power system (1) and the power management system (2) may not be capable of providing the required power. This may have a critical effect on the performance of the DP system operation. The operator will usually receive warnings and alarms in order to make intervention and plan the operation of the vessel (0).

### Thruster drives

A vessel (0) powered with electrical motor (32) driven thrusters (31) is considered. A thruster (31) is a special kind of propeller unit for marine vessels in which the propeller is mounted on a shaft, often in a tunnel or duct. The direction of the thruster, which is in the direction of the thrust provided by the thruster, may for some thrusters be rotated about a mainly vertical axis. Such thrusters are called azimuth thrusters.

Firstly, a thruster (31) with fixed direction will be discussed. A thruster (31) may be regarded as comprising two subsystems: The thruster drive motor (32) and the thrust unit (31). The thrust unit (31) comprises the propeller blades and the propeller shaft of the thruster, which is the part of the thruster that provides a thrust force on the water when the propeller shaft rotates. The thrust unit (31) will give a thrust force that depends on the shaft speed. The thruster drive comprises the motor (32) that drives the propeller shaft and the associated electronics and control software. The input signal (61) to the thruster will typically be the desired shaft speed, but in some cases it may be the shaft power. The electronics and the control software of the thruster drive motor (32) will then control the electric motor (32) of the thruster drive motor (31) with the objective of achieving the desired shaft speed. To achieve the desired values for shaft speed for the thruster (31), the thruster motor (32) will require an adequate electrical power supply from the electrical power system (1) that is controlled by the power management system (2).

In the description dynamics of the thruster (31), e.g. in connection with simulator design, it is advantageous to describe the thruster (31) as a combination of two subsystems: The first subsystem is the thruster drive that is given the desired shaft speed as the input signal, and that will control the electric motor (32) of the drive so that the measured shaft speed converges to the desired speed after a certain settling time if sufficient power is supplied from the power system (1). The second subsystem is the thrust unit (31) that will give a thrust force as a function of the shaft speed.

The ideal situation for the design and tuning of the DP control system (5) is that the thruster drive system (31) will drive the shaft speed to the desired value immediately, that is, with zero settling time, as this will make the design of the DP control system (5) simpler. However, in practical applications the thruster drive system (31) will need some settling time to make the shaft speed converge to the desired value, and it may be necessary to account for this in the design of the DP control system (5). In particular, the DP control system (5) may need feedback signals (78) from sensors (88) in the thruster drive motor (32) system that measure shaft speed, power consumption, and in addition the DP control system (5) may require feedback signals (22) from the power management system (2) from sensors (8) that measure the state of the power management system (2), in particular the voltage, frequency and logical state of the power system (1). With such feedback signals (22), the DP control system (5) may adjust the desired shaft speed signals (62) that are sent to the thruster drive motors (32) so that the power system (1) is not overloaded, and so that the settling time of the thruster drive is taken into account in the DP control system (5) when there are rapid variations in desired shaft speed.

The existence of feedback signals (78) from the thruster drive system (32) to the DP system (5), and feedback signals (22) from the power management system (2) to the DP control system (5) is useful as indicated above, but it has the potential of introducing unforeseen stability problems that may lead to undesired oscillations in electrical power and thrust force, and it may even lead to load tripping and even black-outs in severe cases.

Because of the potential problems that may result from the interaction between the DP system (5), the power management (2) and the thruster drive it is important to run systematic tests for the combined system with DP (5), power management (2) and thruster drives. Moreover, such testing should be done in a wide range of operating conditions in terms of operational modes, weather situations, sea-states and failure modes. Present day testing technology is not adequate for the running of such tests in a systematic manner without undesired modification of software and hardware.

### Alternative propulsion configurations

In one alternative thrust configuration an azimuth thruster (32) is used. Then the thruster drive system will include an azimuth motor (36) that rotates the thruster direction by an azimuth angle about the vertical axis, and the associated electronics and control system (5). The direction of the thrust force will then depend on the azimuth angle of the tunnel direction. In this case the input signals (62) to the azimuth thruster will comprise the desired shaft speed and the desired azimuth angle. The thruster drive will then control the shaft speed to the desired shaft speed after a first settling time, and it will control the thruster azimuth motor so as for the direction of the propeller angle about the vertical axis to be directed in the desired azimuth angle after a second settling time.

In a second alternative thrust configuration the propeller may be a variable-pitch propeller that has variable pitch angles for the propeller blades. In this type of propeller the thrust force will depend on the shaft speed and the pitch angle of the propeller blades. In this case the thruster drive system includes a motor that adjusts the pitch angles of the propeller blades. The input signals to the thruster drive system are then the desired shaft speed and the desired pitch angle of the propeller blades. The thruster drive will then control the shaft speed to the desired shaft speed after a first settling time, and it will control the pitch angles of the propeller blades to the desired pitch angles of the propeller blades after a second settling time.

In a third alternative thrust configuration there will be one or more mechanically driven propellers that each are driven by a diesel engine, possibly with a hydraulic power transmission, and I or one or more electrical thrusters driven by electrical motors. In this case the thruster drive system of the vessel will include the diesel engines of the mechanically driven propellers and the thruster drives of the electrical thrusters. The thruster drive system of the vessel will have as input signals the desired shaft speeds of the propellers, the desired pitch angles of variable pitch propellers, and the desired azimuth angles of the azimuth thrusters. The thruster drive system of the vessel will then use the engines and motors of the thruster drive system to control the shaft speeds to the desired values with the associated settling times, the pitch angles to the desired values with the associated settling times, and the azimuth angles to the desired values with the associated settling times.

### The motion of a vessel (0) and the simulation of this motion

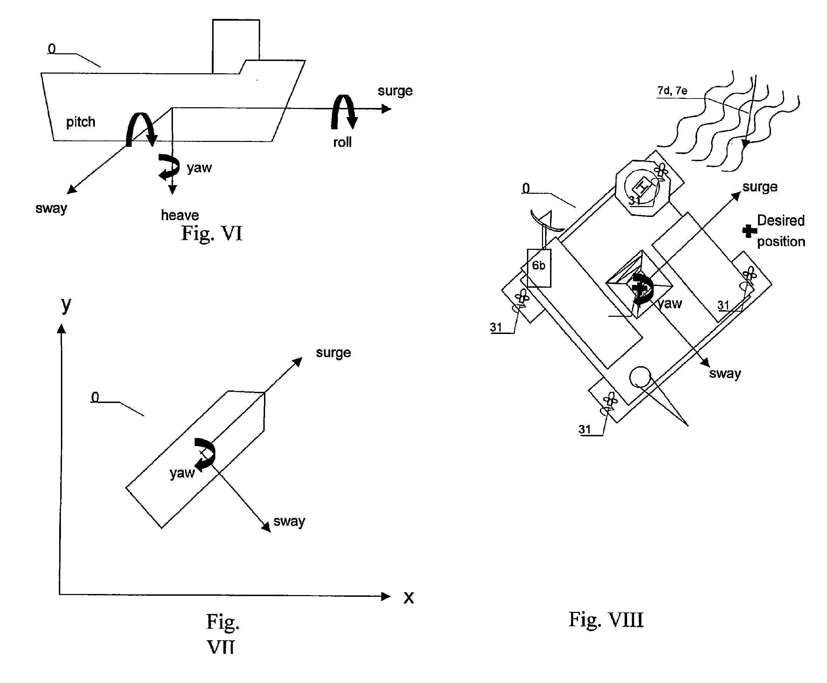

The motion of a vessel (0) is described in terms of the velocity of the vessel (0) in surge, sway and heave, by the position of the center of mass, and by angles in roll, pitch and yaw, see Fig. 6. A vessel (0) will be exposed to forces and moments that influences the motion of the vessel (0). These forces and moments are due to excitation from wind, current and waves, from the use of actuators (3) like propellers (34), thrusters (31) and rudders, from hydrostatic forces that correspond to spring force action due to angles in roll and pitch and position in heave, and from hydrodynamic forces that are related to the velocity and acceleration of the vessel (0). Forces and moments that act on a vessel (0) depend on the vessel motion, whereas the motion of the vessel can be seen as a consequence of the forces and moments that act on the vessel (0). For a vessel or ship (0) the geometry of the hull, the mass and the mass distribution will be known. In addition estimates of the hydrodynamic parameters of the vessel (0) will be known. When the motion of the vessel (0) is given, then forces and moments that act on said vessels (0) can be calculated in a simulator, for example by use of an algorithm. The acceleration and angular acceleration of the vessel (0) may then be calculated from the equations of motion for the vessel (0), which are found from Newton's and Euler's laws. Such equations of motion are described in textbooks. In the equations of motion the following parameters appear:
- The vessel (0) mass,
- the position of the center of mass,
- the position of the center of buoyancy,
- the moments of inertia of the vessel (0);
- the hull geometry, including length, beam and draft;
- hydrodynamic added mass,
- hydrodynamic potential damping,
- viscous damping,
- parameters related to restoring forces and moments on the hull due to motion in heave, pitch and roll,
- parameters relating the amplitude, frequency and direction of wave components to the resulting forces and moments on the hull.
- Moreover, the equations of motion include mathematical models for actuator forces from propellers as a function of the propeller speed and pitch, forces from rudders as a function of the rudder angle and the vessel speed, and forces from thrusters as a function of the thruster speed and direction.

The following procedure can be used to compute the motion of a vessel (0, 0') over a time interval from To to T_{N}:
Suppose that the motion of the vessel (0, 0') is given at the initial time instant T0, and the forces and moments are calculated at this time instant. The acceleration and angular accelerations of the vessel (0, 0') at time To can then be computed from the equations of motion for the vessel (0, 0'). Then numerical integration algorithms can be used to calculate the motion of the vessel (0, 0') at time T₁=T₀+h, where h is the time step of the integration algorithm. For a vessel (0, 0') the time step h will typically be in the range 0.1 - 1 s. When the motion of the vessel (0, 0') at time T₁ is computed, the forces and moments at time T₁ can be computed, and the acceleration and angular acceleration at T₁ are found from the equations of motion. Again, using numerical integration the motion of the vessel (0, 0') at time T₂=T₁+h is computed. This procedure can be repeated at each time instant T_{K}=T₀+h*K until time T_{N} is reached.

The waves that act on a vessel (0, 0') are described as a sum of wave components where one wave component is a sinusoidal long-crested wave with a given frequency, amplitude and direction. For a given location at sea the prevalent distribution of amplitude and frequency of the wave components will be given by known wave spectra like the JONSWAP or ITTC spectra, where the intensity of the wave spectrum is parameterized in terms of the significant wave height. The resulting forces and moments acting on the vessel (0, 0') will be a function of the amplitude, frequency and direction of the waves, and of the velocity and course of the vessel.(0) Forces and moments from wind will be given by wind speed, wind direction, vessel (0) velocity and the projected area of the vessel (0) above the sea surface as a function of the vessel course relative to the wind direction. Forces and moments from current will be given by the current speed, current direction, the projected area of the hull under the sea surface, and by the vessel velocity and course relative to the current direction.

### Dynamic positioning - DP

In dynamic positioning, so-called DP, the vessel (0) is controlled in three degrees of freedom (DOF). The desired position in x and y and in course are given as inputs from an operator using keyboard, roller ball, mouse or joy-stick on an input command device or control panel (50). A control system (5) is used to compute the required actuator forces in the surge and sway directions, and the actuator moment about the yaw axis so that the vessel (0) achieves the desired position and course. The control system (5) also includes actuator allocation, which involves the computation of propeller forces, rudder forces and thruster forces corresponding to the commanded actuator forces and moments. The control system (5) is implemented through the running of an algorithm on a computer on board the vessel (0). This control system algorithm compares the desired position and course with the measured position and course, and of basis of this the algorithm computes the required actuator forces and moments using control theory and found in textbooks. In addition the algorithm includes an allocation module where propeller forces, rudder forces and thruster forces are computed. The position and heading are measured by DGPS sensors, gyrocompasses, hydro-acoustic sensor systems where transponders are arranged on the sea floor, laser- or radar-based position reference sensors, and taut-wires where the inclination of a taut wire fixed on the sea-floor is measured.

### Joystick system

Such systems are similar to DP systems (5), and often embedded within DP systems (5), except that there is no position feedback. The operator will manually position the vessel (0) by commanding a total thrust direction and magnitude with the joystick. Such systems rely on thrusters, power system (1) and power management systems (2) in exactly the same way as DP control systems (5). Some joystick systems may also include automatic heading control functions and compensation for wind or current forces.

### Short figure captions

Prior art is illustrated in a block diagram shown in Fig. 1 with a control system (5) receiving input commands from a corresponding input command device and measurements from so-called position reference sensors (81). The control system (5), which may be a dynamic positioning system, sends control signals (6) to electrical motors for actuators which forces combined with external forces result in a dynamic vessel behaviour sensed by said sensors (8) and causing the control system (5) to react further. The actuators (3) are provided with electrical energy from a power generator with a power engine on-board. The power generator and engine is controlled by a power management system (2).

The invention is illustrated in the attached Figs. II to 5. The drawings are meant for illustrating the invention, and shall not be construed to limit the scope of the invention, which shall be limited by the attached claims only.

### Power Management Systems (PMS) (2) in combination with Dynamic Positioning Systems (DP) (5)

The most problematic phenomenon for a PMS (2) and power system (1) is the occurrence of large and rapidly varying power fluctuations in the electrical power system (1). In particular, large and sudden power increases are potentially problematic, and may lead to power tripping or black-outs. Such sudden and large increases in power demand can be caused by a large and sudden increase of the power of an electrical thruster, which may occur in large waves or wind gusts under DP operation, or as a consequence of some component failure that lead to temporary loss of position or heading. The electrical power consumption of a thruster in a vessel (0) that is running under a DP system (5) will depend on the detailed characteristics and performance of the DP system (5). This means that the performance of a PMS (2) on a vessel (0) with electrical thrusters and DP will depend strongly on the DP system (5).

A block diagram is shown in Figure 1 of a DP system (5) in its operative state on a vessel (0) with electrically powered thrusters. The DP control system (5) sends control signals (6) to the thruster system. The thruster system is powered by the electrical power system (1), which in turn is controlled by the marine automation and PMS (2). The DP control system (5) receives feedback signals from the PMS (2) so that the DP control system (5) may adjust its control signals (6) with the objective of avoiding potentially problematic situations that may lead to a black-out of the electrical power system (1). This is usually referred to as blackout prevention functionality in the DP system (5). Because the marine automation and PMS (2) are complicated systems with many logical conditions and rule-based control, the feedback interconnection from the power (1) and PMS (2) to the DP control system (5) will be difficult to analyze, and it may therefore cause unforeseen stability problems that may lead to undesired events like unacceptable power variations or a power black-out.

### Testing of PMS (1) for vessel (0) with DP.

A PMS (2) is a complex system, and the successful operation of the PMS(2) is critical for the operation of a vessel (0) with electrically driven thrusters and propellers. This clearly introduces the need for extensive testing of the function a PMS (2). With presently available test systems the PMS (2) may be tested at the facilities of the manufacturer of the PMS (2) in a FAT test (Factory Acceptance Test), and it may be tested on-board the vessel (0) in sea-trials after it has been installed. However, the performance of a PMS (2) will depend closely on the characteristics of the particular power system (1) that it controls. In particular the electrical power requirements of the propellers and thrusters as controlled by the DP system (5) will be a significant part of the total electrical power. Because of this a PMS (2)should be tested in combination with the DP system (5) to see if the PMS (2) will function properly when supplying the required power to the DP system (5). Moreover, such testing should address a wide range of operating conditions, that is, with different sea-states, different currents, different sensor (8) and actuator (3) failures, and different operator errors.

This implies that the testing of a PMS (2) as a separate unit in a FAT test at the facilities of the manufacturer of the PMS (2) will not be sufficient. In addition it is necessary to test the PMS (2) in sea-trials after it has been installed on-board the vessel (0). However, to make an entirely realistic test of the PMS (2) and DP system (5) in conditions that are to be expected, it would be necessary to wait for or to seek weather conditions and sea states that are expected, but rarely occur, or to wait for or to provoke situations that could be expected if certain errors occurred, but that would be dangerous if such situations occurred accidentally or by provocation. It will hardly be considered as an option to expose the vessel (0) to extreme situations, like damaging engines or generators, in order to check if the control system (5) gives control signals (6) for correct compensation of the error. Such kind of tests will normally not be conducted.

### Prior Art: Closed loop DP control system HIL-testing

Figure 1 shows a block diagram of a DP system (5) in its operative state. The inputs to the DP control system (5) are sensor signals (7) from position reference sensors (81) and other sensors (8), feedback signals from the marine automation and PMS (2), and input commands from input command devices. The outputs from the DP system (5) are control signals (6) to the actuators (3), which includes propellers and / or thrusters.

In Figure 2 it is illustrated how a DP control system (5) can be tested dynamically according to the invention in closed loop with a simulator (100). This type of test is called hardware-in-the loop testing (HIL testing). The simulator (100) includes an actuator simulator module (3'), a simulated diesel-electrical power system (1') with simulated core power management system (2')? functionality, a simulated vessel module (0'), and a simulated sensor and position reference module (8'). The simulated actuator module (3') produces simulated forces and moments that act on the simulated vessel (0') and a simulated motion of the vessel ('0') is then calculated in real-time. In ordinary HIL testing of the prior art, the inputs to the DP control system (5) are simulated sensor signals (7') from the simulator (100) and possibly simulated input commands (51') from a simulated input command device (50') which may constitute a part of the simulator (100). The output commands of the DP control system (5) are control signals (6, 62) that are sent to simulated actuators (31', 24') in the simulator. In ordinary HIL testing the output control signals (6, 62) of the DP control system (5) are not connected to the actuators (3) of the vessel (0), and the input signals of the DP control system (5) do not come from real position reference sensors (81) and other sensors (8).

The type of HIL testing shown in Figure 2 will be quite useful to test the DP system (5) under a wide range of operating conditions in the form of sea states and weather conditions, and for a wide range of failure situations by setting up the relevant situation in the simulator. This is feasible due to the fact that it is possible to develop detailed and accurate dynamic simulators of the vessel motion in response to the actuator signals, and of the sensor signals (7) in response to the vessel motion. In contrast to this it is not easy to develop accurate simulators for the power system (1) and simulators (2') the PMS (2) because these systems are very complex and difficult to model in sufficient detail, and may include a large number of switching elements with discontinuous outputs that make it difficult to simulate the PMS (2) accurately with available methods and technology. This means that in this type of HIL testing may not allow for a systematic and comprehensive testing of the functionality and performance of the power system (1) and the PMS (2).

In ordinary HIL testing, the inputs to the DP control system (5) are simulated sensor signals (7') from a simulator, and possibly simulated signals from a simulated power and PMS (2), and simulated input commands from the simulator. The outputs of the DP control system (5) are control signals (6) that are sent to simulated actuators (3') in the simulator. In ordinary HIL testing the outputs of the DP control system (5) are not connected to the actuators (3) of the vessel (0), and the inputs of the DP control system (5) do not come from real position reference sensors (81) and other sensors (8).

### Description of the invention

### First embodiment of the invention.

The first embodiment of the invention is illustrated in Fig. 2 related to a new HIL testing arrangement for the testing of a system comprising of the following interconnected modules: A DP system (5), a thruster drive system, an electrical power,system (1), and a power management system (2).

In its operative state these modules are arranged as follows:
* The output signals of the DP control system (5) are the control signals (6, 62) to the thruster drive motor (32) system. The thruster drive motor (32) system consumes electrical energy supplied from the electrical power system (1, 1g, 1 e), which is controlled by the power management system (2). The thruster drive motor (32) system drives the thrust units (31) in the form of propellers with desired commanded shaft speeds, pitch angles and azimuth angles, and in response to this the thrust units (31) will set up propulsion forces that, taken together with disturbance forces like wind and waves, drive the vessel (0) in motions of which surge, sway and yaw are more important in terms of dynamic positioning of the vessel(0). The motion of the vessel is measured by position reference sensors (81), and the sensor signals (7) from the position reference sensors (81) are inputs to the DP control system (5), that in turn calculates the appropriate thruster drive signals (6, 62) that will make the vessel (0) achieve a desired specified motion in surge, sway and yaw.

The first, basic embodiment of the invention comprises the following steps:
* The shaft speeds, pitch angles and azimuth angles that are set up by the thruster drive motor (32) system are measured with commercially available thruster sensors (88) providing thruster drive signals (78).
* The thruster drive sensor signals (78) of the thruster drive system (32) are used as input signals to a simulator (100). The simulator (100) has an algorithm that calculates in real time the simulated variables (7') that describe the motion of the simulated vessel (0') in response to the shaft speeds, pitch angles and azimuth angles , i.e. the thruster drive signals (78) input to the simulator (100).
* The simulator (100) includes simulator modules (8') for the position references sensors (8) that calculate in real time the simulated position reference sensor signals (7') corresponding to the simulated motion of the vessel (0') under simulated disturbances (9') comprising possible simulated failure modes (95').
* The real sensors signals (7) from the position reference sensors (81) are disconnected from the DP control system (5) during the operation of the invention, and instead, the simulated position reference signals (7') are input to the DP control system (5).

During the first and second embodiment, the thruster drive sensors signals (78) are disconnected from being input to the DP control system (5), and replaced by the simulated thruster drive sensor signals (78') used as inputs to the DP control system (5).

The system according to the invention is arranged for testing whether said control system (5) and said power management system (2) will function correctly together and being fault tolerant, under said simulated sensor signals (7') and said simulated disturbances (9'). The simulated disturbances (95') may be simulated single and multiple failures in mechanical, electric and electronic equipment such as sensors (8), actuators (3) and signal transmission. The testing of the system according to the invention may comprise testing whether control system (5), the real power system (1) and the power management system (2) provides fault tolerance to said simulated single and multiple failures in mechanical, electric and electronic components.

### Second embodiment of the invention ("Alt. 3")

In a second embodiment of the invention the system in its operative state is much the same as in the first embodiment, but in addition to the feature that the system includes thruster motor sensors (88) that measure shaft speeds, power consumption, pitch angles and azimuth angles, and the sensor signals (78) from the thruster sensors are inputs to the DP control system (5), real PMS feedback signals (22) from the power management system (2) are inputs to the DP control system (5). The invention comprises the same steps as in the basic embodiment of the invention.

### Third embodiment of the invention (Alt. 2)

In the third embodiment of the invention illustrated in Fig. 4, the system in its operative state is rather similar to the second embodiment, but has some slight but significant differences. The third embodiment of the invention comprises the following steps:
* The output signals (6, 62) from the DP control system (5) comprise the control signals (62) to the thruster drive system (32, 31), as with the first and second embodiment.
* The output signals (6) of the DP control system (5), said output signals (6) comprising the control signals (62) to the thruster drive system, are in addition used as real input control signals (62) to the simulated drive motors (32') in the simulator (100), please see Fig. 4.
* The simulator (100) has a simulator module (32') with an algorithm that calculates in real time the simulated variables that describe the dynamics of the simulated electrical drive motor (32') for the thruster (31'). Further, simulator modules comprising simulated electrical power system (1') and simulated power management system (2'), including the simulated shaft speeds, power consumption, pitch angles and azimuth angles of the simulated thruster (31').
* The vessel dynamics algorithm module in the simulator (100) calculates in real time the simulated variables that describe the motion of the simulated vessel (0') in response to the simulated shaft speeds, pitch angles and azimuth angles, under simulated disturbances (9') and possibly under simulated failure modes (95').
* The simulator includes a simulator module (8') that calculates the simulated sensor signals (7') corresponding to the variable that describe the dynamics of the thruster drive system.
* The simulator (100) includes a simulator module (8') for the position references sensors (8) that calculate in real time the simulated position reference sensor signals (7') corresponding to the simulated motion of the simulated vessel (0').
* The sensors signals (7) from the position reference sensors (81) are disconnected from the DP control system (5), and instead, the simulated position reference signals (7') are input to the DP control system (5).

Feedback measurement signals (22') output from the simulated power management system (2') may be transmitted back to the DP control system (5) as illustrated in Fig. 4, but the simulated PMS (2') output signal (22') may be recorded for comparison with a real measurement signal (22) output from the real power management system (2), to check the quality of the simulation of the simulated power management system (2'). (If sufficiently similar, the modeled or simulated PMS (2') is verified as a realistic simulation module for the real PMS (2) under the simulated conditions, and may be used in future modelling.) As described above it is not easy to develop accurate simulators (1') for the power system (1) and simulators (2') for the PMSbecause these systems are very complex and difficult to model in sufficient detail, and may include a large number of switching elements with discontinuous outputs that make it difficult to simulate the PMSaccurately with available methods and technology, thus feedback from an insufficiently modeled power management system (2') may not be practically conducted.

### Fourth embodiment of the invention.

In a fourth embodiment of the invention illustrated in Fig. 5, the system in its operative state is much similar to the third embodiment. The fourth embodiment of the invention comprises the steps of the third embodiment of the invention with the following additional step:
* The signals (22) from the real power management system (2) are connected via a PMS feedback line (21) to the DP control system (5). Simulated signals from the simulated power management system (2') are not input to the DP control system (5).

### Advantages of different embodiments of the invention

### First embodiment of the invention.

The first embodiment of the invention illustrated in Fig. 2 is a hardware-in-the-loop ("HIL") -test of a system comprising the DP control system (5), the thruster drive motor (32)system, the electrical power system (1), and the power management system (2). Because the thruster drive system (32) drives the actual thruster (31) units that in turn drive the vessel (0), the load on the thruster drive system (32) may be realistic. Compared to prior art in which a DP control system (5) has been tested in HIL testing, the advantage of the present invention is that the thruster drive system (32), the electrical power system (1), and the power management system (2) are also tested in a hardware-in-the-loop configuration in combination with the DP control system (5). This is important as the coupling between the DP control system (5) and the power management system (2) may lead to unforeseen problems that may lead to potentially dangerous or costly situations involving load tripping and black-outs.

The inclusion of the vessel simulator (100) receiving thruster sensor signals (78) as inputs makes it possible to test the system for a wide range of simulated conditions with simulated disturbances (9') in terms of weather conditions, sea-states, operational scenarios, and simulated failure modes (95'). It is possible, but it would not be feasible to test the system under such a wide range of real conditions in regular sea trials because this would make it necessary to seek a wide range of weather conditions and sea-states, and it would involve putting the vessel (0) in potentially dangerous failure situations, which would lead to unacceptable testing time and prohibitive costs to a civilian vessel (0) and potential danger to the vessel (0).

### Second embodiment of the invention.

The second embodiment of the invention as illustrated in Fig. 3 has the same advantages as the basic embodiments, but in addition feedback signals (72) from the thruster drive (32) and feedback signals (22) from the real power management system (2) to the DP control system (5) will be included in the test. The inclusion of these feedback interconnections are common in DP systems (5) and increases the complexity of the combined dynamics of the DP system (5) and the power management system (2), and testing is of the combined system in a HIL configuration may be of great value.

### Third embodiment of the invention.

The third embodiment of the invention illustrated in Fig.4 is a hardware-in-the-loop test of a system comprising the DP control system (5), the thruster drive motor system (32), the electrical power system (1), and the power management system (2). In this embodiment the simulator (100) includes models of the thruster drive system (32'), the electrical power system (1') and the power management system (2). The advantage of this solution is that there is no need to access the thruster drive sensors (88), which means that this solution may lead to a simpler interfacing so that the preparations before the testing may take less time than the first embodiment and the second embodiment of which the test system must be interfaced to the thruster drive sensors (8).

Compared to the first embodiment and the second embodiment this third embodiment has the possible disadvantage of having to include simulation modules for the thruster electrical drive system (32'), the electrical power system (1'), and the power management system (2'). As noted above, these modules are difficult to simulate accurately. However, in this embodiment the real thruster drive system (32, 31), the real electrical power system (1), and the real power management system (2) will be thoroughly tested even though the simulation modules for the thruster drive system (32'), the electrical power system (1'), and the power management system (2') may be inaccurate. The reason for this is that the real thruster drive system, the real electrical power system (1), and the real power management system (2) are driven by the DP system (5) in the tests, and if the testing scenarios incur failures and breakdown of these real modules, this will be detected in the tests.

Also in this embodiment the thruster drive system drives the actual thruster units (31) that in turn drive the vessel (0), and it follows that the load on the thruster drive system (32) will be rather realistic. This means that also this embodiment has the advantage compared to prior art that where the DP system (5) has been tested in HIL testing that the thruster drive system, the electrical power system (1), and the power management system (2) are also tested in combination with the DP system (5) under a wide range of operating conditions as set up in the simulator.

### Fourth embodiment of the invention.

The fourth embodiment has more or less the same advantages as the third embodiment. When not having feedback from the simulated power management system (2') and rather receiving feedback from the real power management system (2), disturbances due to inaccuracies or errors in simulation are avoided. Moreover, malfunctions due to coupling between the PMS (2) and the control systems (5) under rarely but possibly encountered simulated situations may be uncovered. The detailed characteristics of the systems to be tested, in particular the layout of the feedback from the power management system (2) to the DP system (5), will determine whether embodiment three of four should be used.

## Claims

1. A method for testing a control system (5) of a marine vessel (0),
- said control system (5) receiving input commands (51) such as desired position, heading, and speed from an input command device (50) and sends control signals (6, 62) to actuators (3) such as electrical thruster drive motors (32) for thrusters (31) and electrical propeller motors (35) for fixed-shaft propellers (34),
- said vessel (0) comprising sensors (8) such as position reference sensors (81, 82, ...) providing sensor signals (7, 71, 72,..) to said control system (5),
- said actuators (3) receiving electrical energy provided by an on-board power system (1) being controlled by a power management system (2),
said method **characterized by** the following steps:
- a simulator (100) receiving one or more signals (6, 7) from said vessel (0);
- said simulator (100) comprising
a simulated actuator module (3') providing simulated actuator forces to
a simulated vessel module (0') comprising an algorithm for computing the dynamic behaviour of said simulated vessel (0'), and
a simulated sensor module (8') providing simulated sensor signals (7') describing the calculated dynamic state of said simulated vessel (0');
said sensor module (8') returning one or more of said simulated sensor signals (7') modeled under simulated disturbances (9') such as simulated wind, current, and waves, to said control system (5) while said control system (5) sends control signals (6, 62) to said actuators (3),
for testing whether said real power system (1) is capable of providing sufficient power when controlled by said real power management system (2) when said power management system (2) is commanded by said control system (5), under said simulated sensor signals (7') and said simulated disturbances (9').

2. The method of claim 1, said disturbances (9'), signals (7'), sensors (8') and actuators (3') comprising simulated failure modes (95') of said simulated vessel (0').

3. The method of claim 1, said signals (6) sent from said vessel (0) to said simulator (100) comprising signals (78) from sensors (88) in the thruster drive motor (32) system that measures shaft speed, propeller pitch, power consumption or thruster azimuth angle.

4. The method of claim 1, said control system (5) being a dynamic positioning or "DP" system.

5. The method of claim 1, said environmental conditions comprising weather states.

6. The method of claim 1, said simulated disturbances (95') comprising simulated single and multiple failures in mechanical, electric and electronic equipment such as sensors (8), actuators (3) and signal transmission.

7. The method of claim 6, said testing comprising testing of whether said real power system (1) provides fault tolerance to said simulated single and multiple failures in mechanical, electric and electronic components.

8. The method of claim 1, said vessel (0) being a petroleum platform arranged for dynamic position keeping.

9. The method of claim 1, said sensors (8) sending sensor signals (7) comprising position sensors (81) providing position signals (71), speed sensors (82) providing speed signals (72), and a compass (83) like a gyro, providing heading signals (73);

10. The method of claim 1, said simulated sensor signals (7') comprising simulated position signals (71'), simulated speed signals (72'), and simulated heading signals (73'), and when said vessel simulator (0') responds to external or internal simulated disturbances (9') like one or more of simulated wind, simulated current, simulated waves,

11. The method of claim 1, using a control signal connector (61) on said control signal line (60) for branching off said control signals (6) to a simulator control signal line (60') to said simulator (100), and including a simulated actuator electrical motor (32', 35') interacting with a simulated power generator (1') with a simulated power management system (2'), and an actuator simulator (3') comprising thruster simulators (31', 34').

12. The method of claim 1, in which is added a power management system feedback line (21) for transmitting power management system feedback signals (22) from said power management system (2) to said control system (5).

13. The method of claim 1, in which said simulator (100) comprises a simulated power system (1') with a simulated power management system (2') using a feedback line (21') for simulated feedback signals (22') to said control system (5).

14. The method of claim 1, in which said simulator (100) comprises a simulated power system (1') with a simulated power management system (2'); and
a power management system feedback line (21) for transmitting power management system feedback signals (22) from said real power management system (2) to said control system (5).

15. The method of claim 1, said electrical power generators (1g) driven by generator motors (1e).

16. The method of claim 1, said and one or more propellers (33) driven by electrical propeller motors (34);

17. The method of claim 1, said control system (5) having a signal line connector (88) disconnecting said sensor signal line (80) and a simulated-signal connector (89) connecting a simulated signal line (80') for feeding said simulated sensor signals (7') to said control system (5) still being connected to provide control signals (6) to said major power consuming actuator motors (32, 35).

18. A system for testing a control system (5) of a marine vessel (0),
- said control system (5) arranged for receiving input commands (51) like desired position, heading, and speed from an input command device (50) and arranged for sending control signals (6, 62) to actuators (3) like electrical thruster drive motors (32) for thrusters (31) and electrical propeller motors (35) for fixed-shaft propellers (34),
- said vessel (0) comprising sensors (8) like position reference sensors (81, 82, ...) arranged for providing sensor signals (7, 71, 72, ..) back to said control system (5),
- said actuators (3) being arranged for receiving electrical energy provided by an on-board power system (1) being controlled by a power management system (2), said system **characterized by** the following features:
- a simulator (100) arranged for receiving one or more signals (6, 7) from said vessel (0);
- said simulator comprising
a simulated actuator module (3') arranged for providing simulated actuator forces to
a simulated vessel module (0') comprising an algorithm for computing the dynamic behaviour of said simulated vessel (0'), and
a simulated sensor module (8') arranged for calculating simulated sensor signals (7') for describing the calculated dynamic state of said simulated vessel (0'); said sensor module (8') arranged for returning one or more of said simulated sensor signals (7') modeled under simulated disturbances (9') like simulated wind, current, and waves, to said control system (5) while said control system (5) is arranged for continuously sending control signals (6, 62) to said actuators (3),
said system for testing whether said real power system (1) may provide sufficient power controlled by said real power management system (2) when said power management system (2) is commanded by said control system (5) under said simulated sensor signals (7') and said simulated disturbances (9').

19. The system of claim 18, said system arranged for testing whether said control system (5) and said power management system (2) function appropriately together and being fault tolerant, under said simulated sensor signals (7') and said simulated disturbances (9').

20. The system of claim 18, said control system (5) having a signal line connector (88) for disconnecting said sensor signal line (80) and a simulated-signal connector (89) for connecting a simulated signal line (80') for feeding said simulated sensor signals (7') to said control system (5) still being connected to provide control signals (6) to said major power consuming actuator motors (32, 35).

21. The system of claim 18, said control system's (5) comprising a joystick input device without position feedback, said control system (5) preferably including automatic heading control functions and compensation for wind or current forces.

22. The system of claim 18, said control system (5) having a command input connector (87) for disconnecting said command input (51) and a simulated-command input connector (86) for connecting a simulated command input device (50').

## Patentansprüche

1. Verfahren zum Testen eines Steuerungssystems (5) eines Seefahrzeugs (0),
- wobei besagtes Steuerungssystem (5) Eingabebefehle (51), wie beispielsweise gewünschte Position, Kurs und Geschwindigkeit von einem Eingabebefehlsgerät (50) empfängt und Steuersignale (6, 62) zu Stellantrieben (3), wie zum Beispiel elektrischen Antriebsmotoren (32) für Ruderpropeller (31) und elektrischen Propellermotoren (35) für Propeller (34) sendet, die fest auf der Welle montiert sind,
- wobei besagtes Seefahrzeug (0) Sensoren (8), wie zum Beispiel Sensoren für die Positionsbestimmung (81, 82, ...) umfasst, die besagtem Steuerungssystem (5) Sensorsignale (7, 71, 72, ..) bereitstellen,
- wobei besagte Stellantriebe (3) elektrische Energie empfangen, die von einem Bordstromnetz (1) geliefert wird, das über ein Energiemanagementsystem (2) gesteuert wird,
wobei besagtes Verfahren durch die folgenden Schritte **gekennzeichnet** ist:
- einem Simulator (100), der ein oder mehrere Signale (6, 7) vom besagten Seefahrzeug (0) empfängt;
- wobei besagter Simulator (100) umfasst:
ein simuliertes Stellantriebsmodul (3'), das die simulierten Stellantriebskräfte einem simulierten Seefahrzeugmodul (0') bereitstellt, das einen Algorithmus zur Berechnung des dynamischen Verhaltens vom besagten simulierten Seefahrzeug (0') umfasst, und
ein simuliertes Sensormodul (8'), das simulierte Sensorsignale (7') bereitstellt, die den berechneten dynamischen Zustand des besagten simulierten Seefahrzeugs (0') beschreiben;
wobei besagtes Sensormodul (8') eines oder mehrere dieser besagten simulierten Sensorsignale (7'), modelliert unter simulierten Störeinflüssen (9'), wie zum Beispiel simuliertem Wind, simulierter Strömung und Wellen, an besagtes Steuerungssystem (5) zurückführt, während besagtes Steuerungssystem (5) Steuersignale (6, 62) an besagte Stellantriebe (3) sendet, um zu testen, ob besagtes reale Bordenergienetz (1) fähig ist, ausreichende Leistung bereitzustellen, wenn es vom besagten realen Energiemanagementsystem (2) gesteuert wird und, wenn besagtes Energiemanagementsystem (2) Befehle vom besagten Steuerungssystem (5), unter besagten simulierten Sensorsignalen (7') und besagten simulierten Störeinflüssen (9') erhält.

2. Verfahren nach Anspruch 1, wobei besagte Störeinflüsse (9'), Signale (7'), Sensoren (8') und Stellantriebe (3') simulierte Fehlermodi (95') des besagten simulierten Seefahrzeugs (0') umfassen.

3. Verfahren nach Anspruch 1, wobei besagte Signale (6), die vom besagten Seefahrzeug (0) an besagten Simulator (100) gesendet wurden, Signale (78) von Sensoren (88) im Antriebsmotorsystem (32) des Ruderpropellers umfassen, das die Wellendrehzahl, Propellersteigung, Energieverbrauch oder den Azimutwinkel des Ruderpropellers misst.

4. Verfahren nach Anspruch 1, wobei besagtes Steuerungssystem (5) ein System zur dynamischen Positionierung oder ein "DP" System ist.

5. Verfahren nach Anspruch 1, wobei besagte Umweltbedingungen Wetterzustände umfassen.

6. Verfahren nach Anspruch 1, wobei besagte simulierte Störeinflüsse (95') simulierte Einzel- und Mehrfachausfälle in der mechanischen, elektrischen und elektronischen Ausrüstung, wie zum Beispiel Sensoren (8), Stellantrieben (3) und Signalübertragung umfassen.

7. Verfahren nach Anspruch 6, wobei besagtes Testen, Testen umfasst, ob besagtes reale Bordenergienetz (1) Fehlertoleranz für die besagten simulierten Einzel- und Mehrfachausfälle in mechanischen, elektrischen und elektronischen Komponenten liefert.

8. Verfahren nach Anspruch 1, wobei besagtes Seefahrzeug (0) eine Erdölplattform mit einem System ist, das sie dynamisch auf Position hält.

9. Verfahren nach Anspruch 1, wobei besagte Sensoren (8) Sensorsignale (7) senden, die Positionssensoren (81), die Positionssignale (71) bereitstellen, Geschwindigkeitssensoren (82), die Geschwindigkeitssignale (72) bereitstellen und einen Kompass (83), wie zum Beispiel einen Kreiselkompass, der Kurssignale (73) bereitstellt, umfassen;

10. Verfahren nach Anspruch 1, wobei besagte simulierten Sensorsignale (7') simulierte Positionssignale (71'), simulierte Geschwindigkeitssignale (72') und simulierte Kurssignals (73') umfassen und, wenn besagter Seefahrzeugsimulator (0') auf externe oder interne simulierte Störeinflüsse (9'), wie ein oder mehrere Einflüsse von simuliertem Wind, simulierter Strömung, simulierter Wellen reagiert.

11. Verfahren nach Anspruch 1, das eine Anschlussstelle (61) für Steuersignale an besagter Steuersignalleitung (60) zum Abzweigen besagter Steuersignale (6) zu einer Simulatorsteuersignalleitung (60') zu besagtem Simulator (100) verwendet und einen simulierten elektrischen Stellantriebsmotor (32', 35') einschließt, der mit einem simulierten Stromgenerator (1') mit einem simulierten Energiemanagementsystem (2') und einem Stellantriebssimulator (3') in Wechselwirkung steht, der die Simulatoren (31', 34') der Ruderpropeller umfasst.

12. Verfahren nach Anspruch 1, in dem eine Rückmeldungsleitung (21) des Energiemanagementsystems zur Übertragung von Rückmeldesignalen (22) vom besagten Energiemanagementsystem (2) zum besagten Steuerungssystem (5) hinzugefügt ist.

13. Verfahren nach Anspruch 1, in dem besagter Simulator (100) ein simuliertes Bordenergienetz (1') mit einem simulierten Energiemanagementsystem (2') unter Einsatz einer Rückmeldungsleitung (21') für simulierte Rückmeldesignale (22') zum besagten Steuerungssystem (5) umfasst.

14. Verfahren nach Anspruch 1, in dem besagter Simulator (100) ein simuliertes Bordenergienetz (1') mit einem simulierten Energiemanagementsystem (2') umfasst; und eine Rückmeldeleitung (21) des Energiemanagementsystems zur Übertragung von Rückmeldesignalen (22) des Energiemanagementsystems von besagtem realen Energiemanagementsystem (2) zum besagten Steuerungssystem (5) umfasst.

15. Verfahren nach Anspruch 1, wobei besagte elektrischen Stromgeneratoren (1g) von Generatormotoren (1e) angetrieben werden.

16. Verfahren nach Anspruch 1, wobei ein oder mehrere der besagten Propeller (33) von Elektromotoren (34) angetrieben werden.

17. Verfahren nach Anspruch 1, wobei besagtes Steuerungssystem (5) eine Anschlussstelle (88) für Signalleitungen aufweist, mit der die besagte Sensorsignalleitung (80) abgekoppelt werden kann und eine Anschlussstelle (89) für simulierte Signale zur Verbindung mit einer simulierten Signalleitung (80') aufweist, um besagte simulierte Sensorsignale (7') an besagtes Steuerungssystem (5) zu speisen, das immer noch verbunden ist, um besagten hauptenergieverbrauchenden Stellantriebsmotoren (32, 35) Steuersignale (6) zu liefern.

18. System zum Testen eines Steuerungssystems (5) eines Seefahrzeugs (0),
- wobei besagtes Steuerungssystem (5) eingerichtet ist, Eingabebefehle (51), wie gewünschte Position, Kurs und Geschwindigkeit von einem Eingabebefehlsgerät (50) zu empfangen und eingerichtet ist, Steuersignale (6, 62) an Stellantriebe (3), wie elektrische Antriebsmotoren (32) für Ruderpropeller (31) und elektrische Antriebsmotoren (35) für Propeller (34) zu senden, die fest auf der Welle montiert sind,
- wobei besagtes Seefahrzeug (0) Sensoren (8), wie Sensoren (81, 82, ...) zur Bestimmung der Position umfasst, die eingerichtet sind, Sensorsignale (7, 71, 72, ..) zurück an besagtes Steuerungssystem (5) zu liefern,
- wobei besagte Stellantriebe (3) zum Empfangen elektrischer Energie eingerichtet sind, die von einem Bordenergienetz (1) geliefert wird, das von einem Energiemanagementsystem (2) gesteuert wird, wobei besagtes System durch folgende Merkmale **gekennzeichnet** ist:
- einen Simulator (100), der eingerichtet ist, ein oder mehrere Signale (6, 7) von besagtem Seefahrzeug (0) zu empfangen;
- wobei besagter Simulator umfasst:
ein simuliertes Stellantriebsmodul (3'), dass zur Lieferung simulierter Stellantriebskräfte an
ein simuliertes Seefahrzeugmodul (0') eingerichtet ist, das einen Algorithmus zur Berechnung des dynamischen Verhaltens des besagten simulierten Seefahrzeugs (0'), umfasst, und
ein simuliertes Sensormodul (8'), das zur Berechnung simulierter Sensorsignale (7') zum Beschreiben des berechneten dynamischen Zustands des besagten simulierten Seefahrzeugs (0') eingerichtet ist;
wobei besagtes Sensormodul (8') zur Rückmeldung eines oder mehrerer der besagten simulierten Sensorsignale (7'), die mit simulierten Störeinflüssen (9') wie simulierter Wind, simulierte Strömung und Wellen modelliert sind, zu besagtem Steuerungssystem (5) eingerichtet ist, während besagtes Steuerungssystem (5) für kontinuierliches Senden von Steuersignalen (6, 62) an besagte Stellantriebe (3) eingerichtet ist,
wobei besagtes System zum Testen eingerichtet ist, ob besagtes reale Bordenergienetz (1) ausreichende, vom besagten realen Energiemanagementsystem (2) gesteuerte, Energie bereitstellt, wenn besagtes Energiemanagementsystem (2) vom besagten Steuerungssystem (5) unter besagten simulierten Sensorsignalen (7') und besagten simulierten Störeinflüssen (9') befehligt wird.

19. System nach Anspruch 18, wobei besagtes System zum Testen eingerichtet ist, ob besagtes Steuerungssystem (5) und besagtes Energiemanagementsystem (2) in geeigneter Art und Weise zusammen funktionieren und fehlertolerant bei den besagten simulierten Sensorsignalen (7') und den besagten simulierten Störungseinflüssen (9') sind.

20. System nach Anspruch 18, wobei besagtes Steuerungssystem (5) eine Anschlussstelle (88) für Signalleitungen zum Abkoppeln besagter Sensorsignalleitung (80) und eine Anschlussstelle (89) für simulierte Signale zum Verbinden einer simulierten Signalleitung (80') aufweist, um besagte simulierten Sensorsignale (7') an besagtes Steuerungssystem (5) zu speisen, das immer noch verbunden ist, um Steuersignale (6) zu den besagten hauptenergieverbrauchenden Stellantriebsmotoren (32, 35) zu liefern.

21. System nach Anspruch 18, wobei besagtes Steuerungssystem (5) ein Joystick-Eingabegerät ohne Positionsrückmeldung umfasst, wobei besagtes Steuerungssystem (5) vorzugsweise automatische Kurskontrollfunktionen und Kompensierung für Wind- oder Strömungskräfte einschließt.

22. System nach Anspruch 18, wobei besagtes Steuerungssystem (5) eine Anschlussstelle (87) für Befehlseingabe zum Abkoppeln besagter Befehlseingabe (51) und eine Anschlussstelle (86) für simulierte Befehlseingabe zum Verbinden eines simulierten Befehlseingabegeräts (50') aufweist.

## Revendications

1. Procédé de test d'un système de commande (5) d'un vaisseau marin (0),
- ledit système de commande (5) recevant des instructions d'entrée (51) telles que position, cap et vitesse souhaités depuis un dispositif d'instructions d'entrée (50) et envoie des signaux de commande (6, 62) à des actionneurs (3) tels que des moteurs d'entraînement de propulseurs électriques (32) de propulseurs (31) et des moteurs d'hélices électriques (35) d'hélices à arbre fixe (34),
- ledit vaisseau (0) comprenant des capteurs (8) tels que des capteurs de référence de position (81, 82, ...) qui fournissent des signaux de capteur (7, 71, 72, ...) audit système de commande (5),
- lesdits actionneurs (3) recevant une énergie électrique fournie par un système de puissance embarqué (1) commandé par un système de gestion de puissance (2),
ledit procédé étant **caractérisé par** les étapes suivantes :
- la réception par un simulateur (100) d'un ou de plusieurs signaux (6, 7) depuis ledit vaisseau (0) ;
- ledit simulateur (100) comprenant
un module d'actionneur simulé (3') fournissant des forces d'actionnement simulées à
un module de vaisseau simulé (0') comprenant un algorithme pour calculer le comportement dynamique dudit vaisseau simulé (0'), et
un module de capteurs simulés (8') fournissant des signaux de capteurs simulés (7') décrivant l'état dynamique calculé dudit vaisseau simulé (0') ;
ledit module de capteurs (8') renvoyant un ou plusieurs desdits signaux de capteurs simulés (7') modélisés dans des conditions de perturbations simulées (9') telles que vent, courant et vagues simulés, audit système de commande (5) tandis que ledit système de commande (5) envoie des signaux de commande (6, 62) auxdits actionneurs (3),
pour tester si ledit système de puissance réel (1) est capable ou non de fournir une puissance suffisante quand il est commandé par ledit système de gestion de puissance réel (2) quand ledit système de gestion de puissance (2) est instruit par ledit système de commande (5) avec lesdits signaux de capteur simulés (7') et lesdites perturbations simulées (9').

2. Procédé selon la revendication 1, lesdits perturbations (9'), signaux (7'), capteurs (8') et actionneurs (3') comprenant des modes de défaillances simulées (95') dudit vaisseau simulé (0').

3. Procédé selon la revendication 1, lesdits signaux (6) envoyés par ledit vaisseau (0) audit simulateur (100) comprenant des signaux (78) provenant de capteurs (88) situés dans le système de moteurs d'entraînement de propulseurs (32) qui mesure la vitesse d'arbre, le pas d'hélice, la consommation de puissance ou l'angle d'azimut des propulseurs.

4. Procédé selon la revendication 1, ledit système de commande (5) étant un système de positionnement dynamique ou "DP".

5. Procédé selon la revendication 1, lesdites conditions environnementales comprenant des états climatiques.

6. Procédé selon la revendication 1, lesdites perturbations simulées (95') comprenant des défaillances simulées uniques et multiples de matériels mécaniques, électriques et électroniques tels que capteurs (8), actionneurs (3) et transmission de signaux.

7. Procédé selon la revendication 6, lesdits tests comprenant des tests si ledit système de puissance réel (1) prévoit ou non une tolérance aux pannes pour les défaillances simulées uniques et multiples des composants mécaniques, électriques et électroniques.

8. Procédé selon la revendication 1, ledit vaisseau (0) étant une plate-forme pétrolière agencée pour un maintien de position dynamique.

9. Procédé selon la revendication 1, lesdits capteurs (8) envoyant des signaux de capteurs (71) comprenant des capteurs de position (81) fournissant des signaux de position (7), des capteurs de vitesse (82) fournissant des signaux de vitesse (72), et un compas (83) tel qu'un gyroscope, fournissant des signaux de cap (73).

10. Procédé selon la revendication 1, lesdits signaux de capteurs simulés (7') comprenant des signaux de position simulés (71'), des signaux de vitesse simulés (72') et des signaux de cap simulés (73'), et ledit simulateur de vaisseau (0') répondant à des perturbations externes ou internes simulées (9') comme une ou plusieurs d'un vent simulé, d'un courant simulé ou de vagues simulées.

11. Procédé selon la revendication 1, utilisant un connecteur de signaux de commande (61) sur ladite ligne de signaux de commande (60) pour dériver lesdits signaux de commande (6) vers une ligne de signaux de commande de simulateur (60') vers ledit simulateur (100), et comportant un moteur électrique d'actionneur simulé (32', 35') interagissant avec un générateur de puissance simulé (1') avec un système de gestion de puissance simulé (2'), et un simulateur d'actionneur (3') comprenant des simulateurs de propulseurs (31', 34').

12. Procédé selon la revendication 1, dans lequel est ajouté une ligne de retour d'informations de système de gestion de puissance (21) pour transmettre des signaux de retour d'informations de système de gestion de puissance (22) depuis ledit système de gestion de puissance (2) jusqu'audit système de commande (5).

13. Procédé selon la revendication 1, dans lequel ledit simulateur (100) comprend un système de puissance simulé (1') à système de gestion de puissance simulé (2') qui utilise une ligne de retour d'informations (21') de signaux de retour d'informations simulés (22') vers ledit système de commande (5).

14. Procédé selon la revendication 1, dans lequel ledit simulateur (100) comprend un système de puissance simulé (1') à système de gestion de puissance simulé (2') ; et
une ligne de retour d'informations de système de gestion de puissance (21) pour transmettre des signaux de retour d'informations de système de gestion de puissance (22) depuis ledit système de gestion de puissance réel (2) jusqu'audit système de commande (5).

15. Procédé selon la revendication 1, lesdits générateurs de puissance électrique (1g) étant commandés par des moteurs de générateurs (1e).

16. Procédé selon la revendication 1, lesdites une ou plusieurs hélices (33) étant commandées par des moteurs d'hélices électriques (34).

17. Procédé selon la revendication 1, ledit système de commande (5) ayant un connecteur de ligne de signaux (88) qui déconnecte ladite ligne de signaux de capteurs (80) et un connecteur de signaux simulés (89) qui connecte une ligne de signaux simulés (80') pour alimenter lesdits signaux de capteurs simulés (7') dans ledit système de commande (5) toujours connecté pour fournir des signaux de commande (6) auxdits moteurs d'actionneurs (32, 35) principaux consommateurs de puissance.

18. Système de test d'un système de commande (5) d'un vaisseau marin (0),
- ledit système de commande (5) étant agencé pour recevoir des instructions d'entrée (51) telles que position, cap et vitesse souhaités depuis un dispositif d'instructions d'entrée (50) et agencé pour envoyer des signaux de commande (6, 62) à des actionneurs (3) tels que des moteurs d'entraînement de propulseurs électriques (32) de propulseurs (31) et des moteurs d'hélices électriques (35) d'hélices à arbre fixe (34),
- ledit vaisseau (0) comprenant des capteurs (8) tels que des capteurs de référence de position (81, 82, ...) agencés pour fournir des signaux de capteur (7, 71, 72, ... ) de retour vers ledit système de commande (5),
- lesdits actionneurs (3) étant agencés pour recevoir une énergie électrique fournie par un système de puissance embarqué (1) commandé par un système de gestion de puissance (2),
ledit système étant **caractérisé par** les éléments suivants :
- un simulateur (100) agencé pour recevoir un ou plusieurs signaux (6, 7) depuis ledit vaisseau (0) ;
- ledit simulateur comprenant
un module d'actionneur simulé (3') agencé pour fournir des forces d'actionnement simulées à
un module de vaisseau simulé (0') comprenant un algorithme pour calculer le comportement dynamique dudit vaisseau simulé (0'), et
un module de capteurs simulés (8') agencé pour calculer des signaux de capteurs simulés (7') servant à décrire l'état dynamique calculé dudit vaisseau simulé (0') ;
ledit module de capteurs (8') étant agencé pour renvoyer un ou plusieurs desdits signaux de capteurs simulés (7') modélisés dans des conditions de perturbations simulées (9') telles que vent, courant et vagues simulés, audit système de commande (5) tandis que ledit système de commande (5) est agencé pour envoyer continûment des signaux de commande (6, 62) auxdits actionneurs (3),
ledit système servant à tester si ledit système de puissance réel (1) est en mesure ou non de fournir une puissance suffisante quand il est commandé par ledit système de gestion de puissance réel (2) quand ledit système de gestion de puissance (2) est instruit par ledit système de commande (5) avec lesdits signaux de capteur simulés (7') et lesdites perturbations simulées (9').

19. Système selon la revendication 18, ledit système étant agencé pour tester si ledit système de commande (5) et ledit système de gestion de puissance (2) fonctionnent correctement ensemble et sont tolérants aux pannes, dans lesdites conditions de signaux de capteurs simulés (7') et de perturbations simulées (9').

20. Système selon la revendication 18, ledit système de commande (5) ayant un connecteur de ligne de signaux (88) pour déconnecter ladite ligne de signaux de capteurs (80) et un connecteur de signaux simulés (89) pour connecter une ligne de signaux simulés (80') pour alimenter lesdits signaux de capteurs simulés (7') dans ledit système de commande (5) toujours connecté pour fournir des signaux de commande (6) auxdits moteurs d'actionneurs (32, 35) principaux consommateurs de puissance.

21. Système selon la revendication 18, ledit système de commande (5) comprenant un dispositif d'entrée à manette sans retour d'informations de position, ledit système de commande (5) comportant de préférence des fonctions de commande de cap et une compensation des forces de vent ou de courant.

22. Système selon la revendication 18, ledit système de commande (5) ayant un connecteur d'entrée d'instructions (87) pour déconnecter ladite entrée d'instructions (51) et un connecteur d'entrée d'instructions simulées (86) pour connecter un dispositif d'entrée d'instructions simulées (50').
